# EUROPÄISCHE PATENTSCHRIFT

(11) **EP 0 884 565 B1**
(45) Veröffentlichungstag und Bekanntmachung des Hinweises auf die Patenterteilung: **22.05.2002**
(21) Anmeldenummer: 98110550.5
(22) Anmeldetag: 09.06.1998
(51) Int. Cl.: G01D 11/24

(54) **Induktiver Drehzahlgeber**
Inductive rotation sensour
Capteur inductif de rotation

(30) Priorität: 10.06.1997 DE 19724483
(43) Veröffentlichungstag der Anmeldung: 16.12.1998
(73) Patentinhaber: Beru AG, 71636 Ludwigsburg (DE)
(72) Erfinder: Bantzhaff, Ralf, 74343 Sachsenheim (DE); Barth, Günter, 72247 Fichtenberg (DE)
(74) Vertreter: Wilhelms, Rolf E., Dr.

(56) Entgegenhaltungen:
- EP-A- 0 282 967
- WO-A-88/06735
- DE-A- 4 309 028

## Beschreibung

Die Erfindung betrifft einen induktiven Drehzahlgeber mit einer Magnetspule und einem daran angeordneten Magneten.

Ein derartiger induktiver Drehzahlgeber, der auf dem Gebiet der Kraftfahrzeugtechnik eingesetzt wird, ist aus der deutschen Patentschrift P 43 31 969 bekannt.

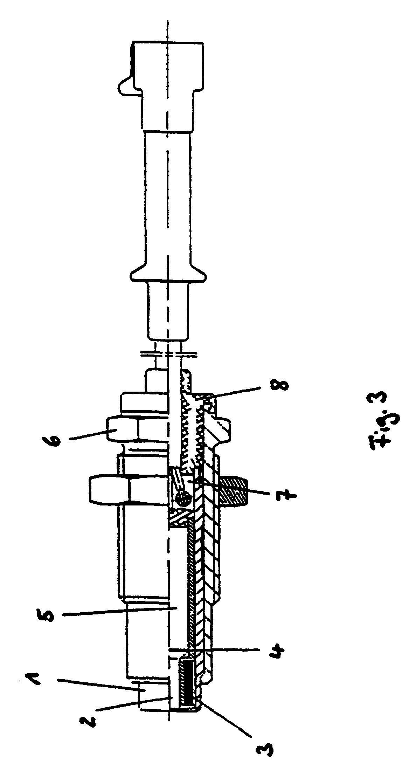

Fig. 3 der zugehörigen Zeichnung zeigt den bekannten induktiven Drehzahlgeber in einer Teilschnittansicht. Der in Fig. 3 dargestellte Drehzahlgeber umfaßt eine Hülse 6, in der ein Spulenkörper 7 mit einer auf das vorderen Ende aufgewickelten Spule 3 angeordnet ist. Im Spulenkörper 7 im Bereich der Spule 3 befindet sich ein Polstift 2, wobei das vordere Ende des Drehzahlgebers, an dem der Polstift 2 und die Spule 3 angeordnet sind, von einer Kunststoffhülse 1 überdeckt ist. Ein Magnet 5 ist im Spulenkörper 7 angeordnet und der Magnet 5 ist auf der der Spule 3 gegenüberliegenden Seite durch eine Spritzmasse 8 im Inneren der Hülse 6 umspritzt.

Der oben beschriebene bekannte Drehzahlgeber ist insofern nachteilig, als seine Fertigung aufwendig ist und die einzelnen Bauteile engen Toleranzen unterliegen.

Durch das direkte Umspritzen des Magnetsystems entsteht bei dem bekannten Drehzahlgeber insbesondere beim Abkühlen der thermoplastischen Spritzmasse eine Formschwindung, die einen nicht erwünschten Luftspalt zwischen dem Magneten 5 und der Spritzmasse 8 erzeugt. Durch diesen Luftspalt sinkt die Signalspannung auf ca. 80 % der möglichen Ausgangsspannung ab. Das hat zur Folge, daß das Magnetfeld, d.h. der magnetische Fluß des Magnetsystems erhöht werden muß, was den Sensor verteuert. Die Folge sind ein größerer Magnet, ein stärkerer Magnet, ein größerer Spulenkörper mit mehr Wickelraum und mehr Spulendraht.

Die der Erfindung zugrundeliegende Aufgabe besteht demgegenüber darin, den induktiven Drehzahlgeber der eingangs genannten Art so auszugestalten, daß Funktionsbeeinträchtigungen vermieden werden, die auf einem Entstehen eines Luftspaltes beim Abkühlen der direkt angespritzten thermoplastischen Spritzmasse beruhen.

Der erfindungsgemäße Drehzahlgeber soll weiterhin einfach zu fertigen und wirtschaftlich sein, es soll insbesondere mit einem reduzierten Magnetsystem und einer wirtschaftlichen Fertigung die geforderte Ausgangsspannung erzielt werden können.

Die oben angegebene Aufgabe wird gemäß der Erfindung durch einen Pfropfen aus einem Elastomermaterial gelöst, der zwischen der der Magnetspule gegenüberliegenden Seite des Magneten und einem direkt angespritzten Kopfteil des Drehzahlgebers eingepreßt ist.

Aufgrund der erfindungsgemäßen Ausbildung, d.h. der Anordnung des federelastischen Pfropfen aus einem Elastomermaterial sind keine engen Toleranzen insbesondere bezüglich des Spulenkörpers der Magnetspule mehr notwendig und ist eine einfache Montage der Einzelteile und eine einfache Endumspritzung des Drehzahlgeberkopfes möglich.

Aufgrund der Vermeidung eines Luftspaltes zwischen dem Magneten und dem Spritzwerkstoff ergibt sich eine höhere Ausgangsspannung und eine höhere Prozessicherheit hinsichtlich der Ausgangsspannung. Das Magnetsystem hat geringere Abmessungen, der Drehzahlgeber ist insbesondere kleiner und die Wirtschaftlichkeit ist erhöht.

Das heißt im einzelnen, daß gegenwärtig bei der Drehzahlgeberfertigung das Magnetsystem mittels einer Stahlfeder vorgespannt wird, die den Magneten und den Polstift stirnseitig ohne Luftspalt an die Hülse drücken. Dieses Federelement kann aber nicht mit einem Kunststoffmaterial fertig umspritzt werden, was bedeutet, daß der Kopfteil nicht direkt auf die Feder gespritzt werden kann. Es gibt andere Fertigungsverfahren, bei denen der Polstift und der Magnetlaser geschweißt zusammengefügt und mittels Spritzmasse beim Spritzvorgang an die Sensorstirnfläche gedrückt werden. Dieses Verfahren ist durch den Schweißprozeß kostenintensiv.

Bei dem erfindungsgemäßen Drehzahlgeber kann eine direkte Umspritzung erfolgen, der Kern muß nicht lasergeschweißt werden. Nach der Aushärtung der Spritzmasse im Kopfbereich tritt ein Materialschwund auf, der durch die Vorspannung des Pfropfens aus einem Elastomermaterial vollständig ausgeglichen wird. Die Restspannung, die der Pfropfen noch ausübt, ist groß genug, um den auf dem Gebiet der Automobiltechnik bestehenden Anforderungen hinsichtlich der Schwingungen und der Temperatur standzuhalten. Es tritt somit am Magnetsystem kein Luftspalt an der Drehzahlgeberstirnfläche auf, so daß die maximale Ausgangsspannung je nach Drehzahl und Abstandsabhängigkeit anliegt.

Im folgenden wird anhand der zugehörigen Zeichnung ein besonders bevorzugtes Ausführungsbeispiel des erfindungsgemäßen Drehzahlgebers näher beschrieben. Es zeigen
Fig. 1 eine Teilschnittansicht des Ausführungsbeispiels,
Fig. 2 eine schematische Ansicht eines Pfropfens aus einem Elastomermaterial für den in Fig. 1 dargestellten Drehzahlgeber und
Fig. 3 in einer Teilschnittansicht ein Ausführungsbeispiel eines bekannten Drehzahlgebers.

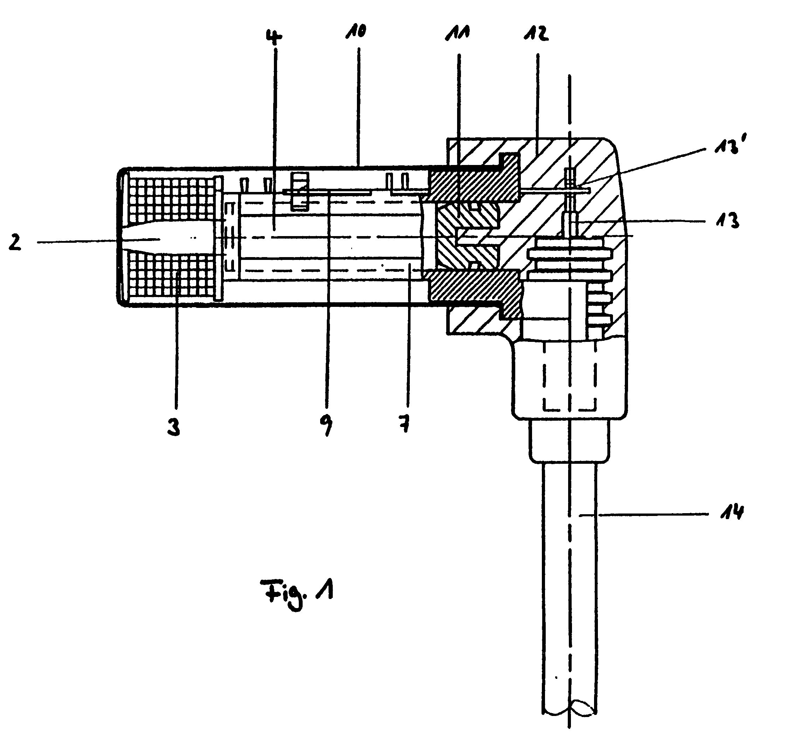

Der in Fig. 1 dargestellte Drehzahlgeber umfaßt eine Edelstahlhülse 10, einen Spulenkörper 7, auf dessen vorderen Teil eine Spulenwicklung 3 gewickelt ist, einen kaltgeschlagenen Polstift 2 sowie einen Magneten, beispielsweise einen Stabmagneten 4, der an der Spulenwicklung 3 im Spulenkörper 7 angeordnet ist.

Die Spulenwicklung 3 besteht aus einer Lagenwicklung, die auf den Spulenkörper 7 gewickelt ist, wobei die Wickelenden an Stromschienen 9 gelötet sind.

Der Spulenkörper 2 wird bei der Montage in der Edelstahlhülse 10 angeordnet, wonach der Polstift 2 und der Stabmagnet 4 montiert werden.

Ein Pfropfen 11 aus einem elastomeren Material ist in diese Anordnung eingepreßt, und zwar an der der Spulenwicklung 3 abgewandten Seite des Magneten 4.

Die Ableitung 14 ist in den Spulenkörper 7 eingelegt und mit ihren Leitungsenden 13 mit den Stromschienen 9 verlötet.

Ein Kopfteil 12 ist direkt angespritzt.

Der Drehzahlgeber mit dem oben beschriebenen Aufbau und der oben beschriebenen Fertigungsweise wird anschließend aufmagnetisiert und elektrisch geprüft.

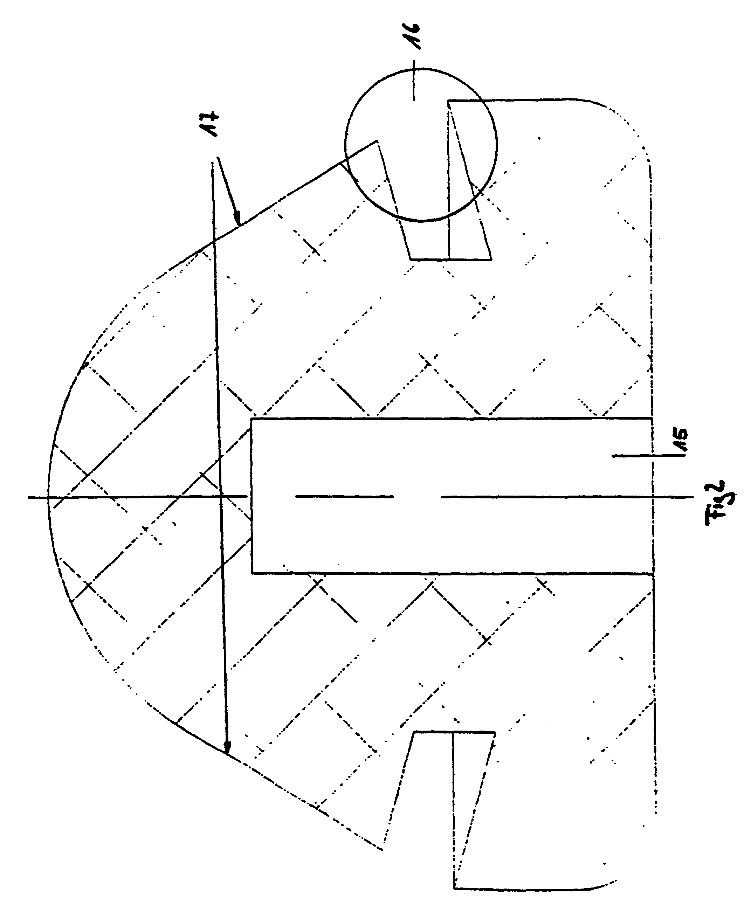

Fig. 2 zeigt einen Pfropfen 11 aus einem elastomeren Material für den in Fig. 1 dargestellten Drehzahlgeber. Der in Fig. 2 dargestellte Pfropfen enthält Querrillen 16, die zur Abdichtung des Magneten 4 gegenüber der Spritzmasse 12 dienen, sowie ein Sackloch 15, das für die Vormontage des Drehzahlgebers verwandt wird und in das ein Einpreßdorn gesteckt wird. Anschließend wird der Pfropfen 11 gegen den Magneten 4 gepreßt. Die kegelige Form 17 des Pfropfens 11 ermöglicht ein genaues Einpressen ohne Verkanten.

## Patentansprüche

1. Induktiver Drehzahlgeber mit einer Magnetspule und einem Magneten, der an der Magnetspule angeordnet ist, **gekennzeichnet durch** einen Pfropfen (11) aus einem Elastomermaterial, der zwischen der der Magnetspule (3) gegenüberliegenden Seite des Magneten (4) und einem direkt angespritzten Kopfteil (12) des Drehzahlgebers eingepreßt ist.

## Claims

1. Inductive speed sensor having a magnet coil and a magnet which is arranged at the magnet coil, **characterised by** a plug (11) made of an elastomer material, which plug is pressed in between the side of the magnet (4) remote from the magnet coil (3) and a head portion (12) of the speed sensor, which head portion is injection-moulded on directly.

## Revendications

1. Capteur inductif de vitesse de rotation comportant une bobine magnétique et un aimant, qui est disposé sur la bobine magnétique, **caractérisé par** un bouchon (11) en matériau élastomère, qui est inséré à force entre le côté de l'aimant (4), qui est situé à l'opposé de la bobine magnétique (3), et une partie de tête (12), directement moulée par injection, du capteur de vitesse de rotation.
